# EUROPEAN PATENT SPECIFICATION

(11) **EP 4 601 517 B1**
(45) Date of publication and mention of the grant of the patent: **24.06.2026**
(21) Application number: 23805106.4
(22) Date of filing: 13.10.2023
(51) Int. Cl.: A47J 42/16, A47J 42/46, A47J 42/20

(54) **A BEAN GRINDING APPARATUS**
EIN BOHNENMAHLGERÄT
APPAREIL À MOUDRE DES GRAINS

(30) Priority: 13.10.2022 GB 202215109
(43) Date of publication of application: 20.08.2025
(73) Proprietor: Nicholson Design Consultants Limited, Waterlooville, Hampshire PO7 7RS (GB)
(72) Inventor: NICHOLSON, Martin, Waterlooville Hampshire PO7 7RS (GB)
(74) Representative: Bridle Intellectual Property
(86) International application number: PCT/GB2023/052657
(87) International publication number: WO 2024/079476

(56) References cited:
- EP-A1- 0 513 759
- WO-A1-2023/274895
- US-A- 2 522 643

## Description

The present invention relates to a bean grinding apparatus, for example a coffee bean grinder. Optimum beverages, such as coffee, are best produced from precise quantities of fresh, just ground, roasted coffee beans. For this, it is desirable to provide a grind flow path that is as near to vertical as possible and free from any areas where the grounds can collect and be trapped. It is also mechanically desirable to drive a rotationally driven burr from below and mount a drive motor as close to the burr as possible.

An example of a conventional bean grinding apparatus is disclosed in WO 2018/211264.

In such apparatus, the beans are typically ground using concentric burrs. In other words, an inner burr has a frustoconical outwardly-facing grinding surface and an outer burr has a frustoconical inwardly-facing grinding surface, and the beans are ground between the adjacent grinding surfaces. It is important in bean grinding apparatus that utilise concentric burrs that the concentricity between an inner burr and an outer burr is maintained in order to maintain the consistency of the grinding action.

However, it is sometimes desired to use flat burrs to grind beans, rather than concentric burrs, like in US 2 522 643 A.

When using flat burrs, it is important to maintain the parallel relationship between the opposed grinding surfaces in order to maintain the consistency of the grinding action and to allow consistent fine ground particles to be produced. US 2 522 643 A discloses a bean grinding apparatus comprising a body; a pair of opposed grinding burrs mounted in the body, the burrs comprising a rotationally fixed burr and a rotationally driven burr, the rotationally driven burr having a rotational axis about which it rotates; a drive motor operatively coupled to the rotationally driven burr via a drive shaft; a grounds flow path defined within the body; and an exit spout, the exit spout having an inlet in communication with the grounds flow path and an outlet; wherein the rotationally fixed burr and the rotationally driven burr each define a respective substantially planar grinding surface; the grinding surfaces face each other; the planes defined by the grinding surfaces of the burrs are parallel to each other and perpendicular to the rotational axis; a proximal end of the drive shaft is connected to the drive motor; and deflection of the rotationally driven burr relative to the rotational axis is resisted on one side by the drive shaft a proximal end of the drive shaft is connected to the drive motor being supported within a drive shaft bearing , and on the opposite side by a support shaft which extends from the rotationally driven burr, wherein a distal end of the support shaft is supported by a support shaft bearing assembly carried by the body, wherein the support shaft bearing assembly comprises a central body portion which defines therein a bore and an outer locating ring.

The object of the present invention is to provide an improved bean grinder which utilises flat burrs or planar burrs (i.e. burrs that include a planar grinding surface).

According to the invention, there is provided a bean grinding apparatus according to claim 1.

It will be appreciated that it is important to prevent lateral movement, displacement or tilting of the rotationally driven burr relative to the rotational axis in order to maintain the parallel relationship between the opposed planar grinding surfaces. Accordingly, the rotationally driven burr is supported on opposite sides by spaced apart bearings located within the body.

The grinding burrs are suitably located within a grinding chamber defined by the apparatus body.

In an embodiment of the invention, the rotationally driven burr is carried by a rotationally driven burr carrier, wherein the rotationally driven burr carrier includes a body portion which defines a central channel or bore, and a distal portion of the drive shaft is located within the central channel/bore. Suitably, the rotationally driven burr carrier is rotationally locked relative to the drive shaft. For example, the rotationally driven burr carrier may be keyed to the distal portion of the drive shaft that is located within central channel, or the drive shaft may form a friction fit with or be welded or adhered to the rotationally driven burr carrier.

The support shaft suitably extends axially from the body portion of the rotationally driven burr carrier. The support shaft and the body portion of the rotationally driven burr carrier may be separate components or they may be a unitary component. For example, the rotationally driven burr carrier and the support shaft may be single moulded or otherwise formed component.

In a further embodiment of the invention, the support shaft includes a main body portion and a distal end portion. Both the main body portion and the distal end portion may be cylindrical. Optionally, the distal end portion has a smaller diameter than the main body portion.

By reducing the diameter of the distal end portion of the support shaft, a smaller bearing may be used to rotationally support the support shaft without compromising the overall strength of the support shaft.

Suitably, the distal end portion of the support shaft is rotatably received within the support shaft bearing assembly.

In order to reduce friction between the distal end portion of the support shaft and the support shaft bearing assembly, the distal end portion of the support shaft may include a sleeve. The sleeve may be rotationally fixed relative to the distal end portion of the support shaft, in which case, the sleeve may rotate within the support shaft bearing assembly; or the distal end portion of the support shaft may rotate within the sleeve (i.e., the sleeve may be rotationally coupled to the distal end portion of the support shaft), in which case, the sleeve may be fixed within the support shaft bearing assembly. It will be appreciated that the friction between the sleeve and the bearing assembly, or between the sleeve and the distal end portion of the support shaft, is suitably lower than the friction between the distal end portion of the support shaft and the bearing assembly. Thus, the sleeve may be a friction-reducing sleeve. The sleeve is suitably formed from a different material compared with the support shaft. For example, the support shaft may be formed from aluminium and the sleeve may be formed from steel or a polymeric material having a relatively low co-efficient of friction, such as PTFE.

In an embodiment of the invention, the support shaft may pass through the rotationally fixed burr, but without engaging it. In other words, the rotationally fixed burr may be carried by a fixed burr carrier which defines an aperture therethrough, and the support shaft may extend through the aperture defined by rotationally fixed burr carrier and is suitably spaced therefrom. In such an arrangement, the support shaft is free to rotate relative to the rotationally fixed burr/rotationally fixed burr carrier.

According to the present invention, the support shaft bearing assembly comprises a central body portion which defines therein a bore that rotatably receives therein the distal end portion of the support shaft (and optionally the sleeve); an outer locating ring; and a plurality of connecting arms which connect the central body portion to the outer locating ring. In this way, the central body portion may be aligned with the rotational axis of the drive shaft and the locating ring may be secured to the apparatus body. The connecting arms maintain the central body portion, and thus the distal end of the support shaft, in a fixed position relative to the apparatus body. This prevents or minimises lateral movement or displacement of the distal end of the support shaft, which in turn maintains the parallel nature of the grinding burrs.

In an embodiment of the invention, each of the connecting arms is in the form of an inverted V. In other words, the spaced apart ends of each of the connecting arms face towards the drive motor and the apex of each of the connecting arms faces upwards. Suitably, the connecting arms also taper outwards from central body portion to outer locating ring. Thus, the width of the arms may increase from central body portion to outer locating ring. Connecting arms arranged in this way may have other functions than just maintaining the central body portion in the desired position. For example, the connecting arms may prevent or minimise what is known as "pop-corning", where beans or partially ground beans are urged upwards during the grinding process and exit the top of the apparatus. The connecting arms may assist in deflecting such beans or partially ground beans back into the apparatus, for example towards the grinding chamber of the apparatus within which the grinding burrs are located. Additionally or alternatively, the connecting arms may reduce noise from the grinding process by reflecting or deflecting the sound waves from the apparatus that are generated during the grinding process.

The central body portion of the support shaft bearing assembly may be conical in shape. Thus, it may have a curved upper surface and a base portion, which is optionally planar. The aperture is suitably formed in the base portion.

In a yet further embodiment of the invention, the apparatus further includes a bean hopper having a conical surface which slopes towards the central body portion of the support shaft bearing assembly, and a bean directing channel surface, wherein the bean directing channel surface is arranged to be parallel to an outwardly facing surface of the central body portion; and wherein the bean directing channel surface and the outwardly facing surface of the central body portion together define a bean inlet channel and the gap between the outwardly facing surface of the central body portion and the bean directing channel surface is constant.

By controlling the flow of beans, the grinding burrs do not become clogged and the drive motor is not overworked. For example, the gap between the bean directing surface and the outwardly facing surface of the central body portion may be between 5mm and 20mm, such as from 7mm to 18mm or from 10mm to 15mm. The skilled person will appreciate that the gap may be a predetermined gap that depends on the average size of the beans to be ground.

It will be appreciated that the bean directing surface may be formed as an undercut to the conical surface of the hopper.

In embodiments in which the central body portion is conical, the bean directing surface may be in the form of an inverted frustoconical section, wherein the two conic surfaces are parallel to each other.

The sloping nature of the bean directing surface and the outwardly facing surface of the central body portion of the upper bearing means that the bean directing surface may vertically overlie a portion of the central body portion. In such embodiments, the bean inlet channel is angled relative to a vertical plane. Such an arrangement may also reduce or prevent the risk of "pop-corning" and it may also assist in reducing the noise of the grinder in use.

In a further embodiment of the invention, the substantially planar grinding surfaces of each of the burrs suitably include grinding teeth. It will be appreciated that the opposed grinding teeth carried by the planar grinding surfaces are capable of gripping and grinding the beans as the rotationally driven burr rotates relative to the rotationally fixed burr.

In such embodiments, the rotationally fixed burr and the rotationally driven burr may each have a circular cross section, wherein the substantially planar grinding surface of each burr may be disposed around a peripheral edge portion of the respective burr. For example, an outer peripheral edge portion of each burr. Thus, the beans may enter the grinding chamber defined by the apparatus body radially inwardly of the grinding surfaces of the grinding burrs and may be guided or urged radially outwards towards the opposed planar grinding surfaces.

In a further embodiment of the invention, the rotationally fixed burr and the rotationally driven burr each include a pre-grind portion disposed radially inwards of the grinding surface. Suitably, the pre-grind portion tapers to the grinding surface. For example, the pre-grind portions may be frustoconical or trumpet shaped, such that the pre-grind portions together define a funnel which tapers towards the grinding surfaces of the burrs.

Accordingly, the burrs and/or burr carriers together may define a central cavity into which the beans may be received. Radially outwardly of the central cavity may be provided the tapered pre-grind portions of the burrs, where the spacing between the respective portions of the burrs decreases; and radially outwardly from the pre-grind portions of the burrs may be provided the opposed planar grinding surfaces.

Suitably, the pre-grind portions start to break down the beans and start the grinding process before the partially ground beans are guided or urged towards the grinding surfaces, where the beans are finally ground to desired fineness of the grinds.

In an embodiment of the invention, the pre-grind portions of the burrs include grinding teeth. Thus, both the grinding surfaces and the pre-grind portions of the burrs may include grinding teeth. The grinding teeth of the pre-grind portions of the burrs may grip the beans and grind the beans as the rotationally driven burr rotates relative to the rotationally fixed burr.

The grinding teeth may be formed or arranged to prevent or resist the beans that have entered the pre-grind portions of the burrs from moving radially inwards, for example back to the central cavity.

As noted above, the beans may be guided or urged radially outwards towards the pre-grind portions. Thus, a rotationally driven burr carrier may carry the rotationally driven burr; wherein the rotationally driven burr carrier includes a guide portion disposed radially inwards of rotationally driven burr, wherein the guide portion includes one or more guide ribs which guide unground beans or bean fragments towards the rotationally driven burr. In such embodiments, the guide ribs suitably urge the beans towards the pre-grind portion of the burrs. Suitably, the guide ribs are curved whereby the rotational movement of the rotationally driven burr carrier urges the beans radially outwards, i.e., towards the pre-grind portion of the burrs. It will be appreciated that in such embodiments, the rotationally driven burr may be annular, wherein a central void or cavity is defined by the burr. The guide portion may be disposed within the central void or cavity defined by the rotationally driven burr.

For ease of maintenance or replacement, the rotationally driven burr and/or the rotationally fixed burr may be arranged as part of burr sub-assemblies. For example, the rotationally driven burr carrier, the rotationally driven burr, the support shaft and optionally the guide portion may define a rotational burr sub-assembly. In such embodiments, the rotational burr sub-assembly is suitably rotationally fixed relative to the drive shaft. For example, the rotational burr sub-assembly may be keyed to the drive shaft, wherein the sub-assembly rotates with the drive shaft. In such an arrangement, the rotational burr sub-assembly can be quickly and easily replaced as a single unit or component.

In a similar arrangement to the rotationally driven burr, a rotationally fixed burr carrier may carry the rotationally fixed burr. As with the rotationally driven burr, the rotationally fixed burr carrier may be coupled to the support shaft bearing assembly; wherein the rotationally fixed burr carrier, the rotationally fixed burr and the support shaft bearing assembly together define a fixed burr sub-assembly. Again, this permits the fixed burr sub-assembly to be quickly and easily replaced as a single unit or component.

Suitably, the rotationally fixed burr is paired with a specific rotationally driven burr. Accordingly, both the rotationally driven burr sub-assembly and the fixed burr sub-assembly may be quickly and easily changed together for a different pair of grinding burrs. It will be appreciated that the pairs of grinding burrs may have different grinding profiles. For example, one pair of grinding burrs may produce a finer grind (i.e., smaller particles) than a different, second pair of grinding burrs.

As users may wish to vary the degree of grind that they can obtain, it may be desired to provide a bean grinding apparatus with two separate pairs of grinding burrs. Accordingly, the invention may further include a second rotationally driven burr sub-assembly and a second fixed burr sub-assembly. In such embodiments, the first pair of grinding burrs may be quickly and easily replaced with the second pair of grinding burrs, simply by removing the first rotationally driven burr sub-assembly and the first fixed burr sub-assembly, and then coupling the second rotationally driven burr assembly to the drive shaft and coupling the second fixed burr sub-assembly to the apparatus body. Thus, in this embodiment, the invention may be in the form of a kit which comprises a bean grinding apparatus as defined anywhere herein; a second rotationally driven burr sub-assembly; and a second fixed burr sub-assembly, wherein the second rotationally driven burr sub-assembly and the second fixed burr sub-assembly may be as defined anywhere herein.

Each of the pairs of burr sub-assemblies may include indicia to indicate the correct pairing for the grinding burrs to avoid a first grinding burr being paired with a second grinding burr.

In an embodiment of the invention, the apparatus further includes a first grounds directing element located below the burrs, wherein the first grounds directing element includes one or more fingers which generates an airflow to sweep the grounds into the grounds flow path. Accordingly, the first grounds directing element may be located within the grinding chamber defined by the apparatus body. The grounds flow path is suitably in communication with the grinding chamber (i.e., it may open into the grinding chamber). For example, the apparatus may define a cavity within the grinding chamber below the burrs and the first grounds directing element may be located within the cavity. In this way, grounds that are deposited into the cavity are then swept or urged into the grounds flow path. The first grounds directing element may be in the form of an arm which is carried by the underside of the rotationally driven burr carrier. The arm may extend from a point near the centre of the burr carrier to a peripheral edge portion of the burr carrier. Optionally, the arm is a linear arm. The arm may be swept or angled rearwards from a radius defined by the burr carrier. In the context of the present invention, the term "rearwards" is defined relative to the direction of rotation of the burr carrier.

In addition to the first grounds directing element or as an alternative to the first grounds directing element, the apparatus may further include one or more second grounds directing elements located radially outwards from the burrs, wherein the or each second grounds directing element includes a body which sweep the grounds into the grounds flow path. Thus, an annular channel may be defined within the grinding chamber between the grinding burrs/burr carriers and an outer wall of the grinding chamber, and grounds that are deposited into this annular channel may be swept into the grounds flow path by the second grounds directing element(s). In such embodiments, the body of the or each of the second grounds directing elements is shaped such that it tapers outwardly or inwardly from a leading or trailing edge. In other words, the second grounds directing body may be wedge-shaped. Suitably, the or each of the second grounds directing elements is carried by the rotationally driven burr carrier. The or each second grounds directing elements may include a leading edge portion which extends outwards from a peripheral wall of the burr carrier and a trailing portion which tapers back to the burr carrier. It has been found that if the leading edge portion extends radially outwards, this can result in a build-up of grounds in front of the leading edge. Accordingly, the leading edge portion of the or each of the second grounds directing elements may be swept rearwards. For example, they may define an angle of 10 to 40° rearwards from a radius of the burr carrier. For example, the angle defined between the leading edge portion and the radius may be 15 to 25°. The skilled person will appreciate that in the context of the present invention, the term "rearwards" relates to the direction of rotation of the burr carrier in use.

Suitably, the first and/or second grounds directing elements are driven to rotate by the drive motor. In this way, the first and/or second grounds directing elements may rotate with the rotationally driven burr. For example, the first and/or second grounds directing elements may form part of a rotationally driven burr carrier.

The apparatus suitably includes a bean inlet defined above the grinding burrs and an inlet flow path defined from the bean inlet to the grinding chamber. The bean inlet is suitably defined by the hopper.

The drive motor is suitably connected to the drive shaft via a gearbox. The gearbox permits the speed of rotation of the drive shaft to be different to the speed of rotation of the drive motor output shaft. Commercially available drive motors tend to have a fixed speed of rotation for a given power input and this speed of rotation may not be appropriate for the drive shaft of the apparatus. It has been found that if the rotationally driven burr rotates too quickly, the grinds are urged against the side wall of the grinding chamber and may accumulate on the side wall. In addition, if the beans are ground at too high a speed, then significant heat may be generated in the grinding chamber and the grounds may become "burnt", which leads to a deterioration in the flavour provided by the ground beans. Finally, the noise and vibration of the apparatus may increase with increased speed of rotation of the drive shaft. Conversely, if the rotationally driven burr rotates too slowly, the beans may not be properly urged into the grinding portion of the burrs, which may result in unground or insufficiently ground beans in the apparatus. In view of the above, a suitable rotational speed for the drive shaft of the invention may be from 400 to 800 rpm, for example, from 450 to 750 rpm or from 500 to 700 rpm. Thus, the gearbox suitably provides a rotational speed for the drive shaft which is in the desired range. It will be appreciated that the gearbox may be a reduction gearbox which provides the drive shaft with a slower rotational speed than the drive motor.

In an embodiment of the invention, the apparatus further includes a rotationally fixed burr adjustment mechanism which adjusts the axial location of the rotationally fixed burr relative to the rotationally driven burr. Thus, the rotationally fixed burr adjustment mechanism may vary the spacing or gap between the rotationally fixed burr and the rotationally driven burr. Accordingly, the fineness of the grounds may be adjusted by adjusting the axial spacing between the rotationally fixed burr and the rotationally driven burr. For example, the rotationally fixed burr may be carried by a fixed burr carrier; the fixed burr carrier may include a first threaded part; and the apparatus body may include a rotatable second threaded part which is threadedly engaged with the first threaded part, wherein rotation of the second threaded part (e.g., by a user) results in displacement of the fixed burr carrier in an axial direction relative to the rotational axis. Suitably, the fixed burr carrier is rotationally locked. In other words, it is prevented from rotating when the second threaded part is rotated. As the fixed burr carrier is suitably rotationally locked, it can only move in an axial direction in response to the rotation of the second threaded part.

The exit spout suitably extends downwardly from the body. Furthermore, the exit spout suitably defines a longitudinal axis.

In an embodiment of the invention, the rotational axis defined by the drive shaft and the longitudinal axis of the exit spout form an inverted V.

Suitably, the rotational axis is coaxial with a longitudinal axis of the body, whereby the longitudinal axis of the exit spout is angled with respect to the longitudinal axis of the body.

The angle defined between the rotational axis and the longitudinal axis of the exit spout may be from 5° to 80°, suitably from 10° to 70°, from 10° to 60°, from 10° to 50°, from 15° to 45°, or from 15° to 30°.

The rotational axis may intersect with the longitudinal axis of the exit spout and the point of intersection is suitably located within the body.

Both the rotational axis and the longitudinal axis of the exit spout may be angled with respect to a vertical plane.

The angle between the rotational axis and the longitudinal axis of the exit spout may have a substantially vertical bisector.

In an embodiment of the invention, the apparatus includes a base element, wherein the body of the apparatus is coupled to one end of the base element and an opposite end of the base element defines a grounds collector aperture. The grounds collector aperture suitably receives a grounds collector which is removable from the aperture. The grounds collector aperture is suitably located vertically below the exit spout outlet.

It is known that grinding beans, such as coffee beans, can generate relatively high levels of static charge on the resulting fine ground particles, especially during certain weather conditions. It is generally found that the finer the grind, the more static charge is created. Fine grounds are very light weight, so are significantly affected by the applied static charge. This can make the grinds stick to the surfaces of the grinding apparatus or be urged away from the apparatus.

In order to address this issue, a grounds collector platform may be located on the base element, wherein the grounds collector platform is located below the outlet of the exit spout, defines a grounds collector receiving portion and is formed from wood. The grounds collector platform may define the grounds collector aperture discussed above. The use of a wooden grounds collector receiving portion prevents or minimises the build-up of static charge.

In an embodiment of the invention, the grounds collector platform is spaced from the apparatus body.

The wooden grounds collector platform may be a two-part component comprising a lower part which is fixed to the base element and a detachable upper part.

The exit spout may be formed from a polymeric material or a metallic material.

The apparatus body may be formed from a polymeric material or a metallic material.

The apparatus may include a grounds collector which is shaped to be received by the grounds collector receiving portion. The grounds collector may be formed from a polymeric or a metallic material.

The apparatus may further include feet provided in an underside of the base element. The feet are suitably also formed from wood. The feet may include a sole which defines a friction surface.

The use of wood for the grounds collector platform and optionally the feet significantly reduces or removes the issues associated with the grounds becoming electrostatically charged.

According to a further embodiment of the invention, the apparatus further comprises a reservoir (e.g., a bean hopper) in communication with the grinding chamber within which is located the grinding burrs via an inlet flow path, wherein the reservoir is defined by a reservoir body. The apparatus may further include a cover hingedly coupled to the reservoir body and having a closed configuration in which the reservoir is covered by the cover and access to the reservoir is prevented, and an open configuration in which access to the reservoir is permitted. Furthermore, the drive motor may include an immobilising switch having an operating position which permits the operation of the motor, and an immobilised position in which operation of the motor is prevented. In such embodiments, the cover may include a switch engagement element, wherein the switch engagement element positions the immobilising switch in the operating position when the cover is in its closed configuration.

In an embodiment of the invention, the immobilising switch is biased to its immobilised position.

The immobilising switch suitably interrupts power to the electric motor when in its immobilised position.

In a further embodiment of the invention, the switch engagement element comprises a projecting rod and the immobilising switch defines an aperture which is sized and configured to receive therein the projecting rod.

The reservoir may include an opening and the cover covers the entirety of the reservoir opening when in its closed configuration.

In order that it is possible to see the quantity of beans within the reservoir, the cover may be transparent.

In a further embodiment of the invention, the cover and/or the reservoir body includes a latch configured to releasably retain the cover in its closed configuration. The latch may comprise a magnetic latch.

In embodiments in which the apparatus includes a rotationally fixed burr adjustment mechanism as discussed above, and the adjustment mechanism includes a rotatable second threaded part, the cover may overlie the rotatable second threaded part such that the rotationally fixed burr may not be axially moved when the cover is in its closed configuration.

The skilled person will appreciate that the support shaft may be formed as an extension of the drive shaft, rather than as a separate component.

Thus, according to a second aspect, which is not part of the present invention, there is provided a bean grinding apparatus comprising a body; a pair of opposed grinding burrs mounted in the body, the burrs comprising a rotationally fixed burr and a rotationally driven burr, the rotationally driven burr having a rotational axis about which it rotates; a drive motor operatively coupled to the rotationally driven burr via a drive shaft; a grounds flow path defined within the body; and an exit spout, the exit spout having an inlet in communication with the grounds flow path and an outlet, wherein the rotationally fixed burr and the rotationally driven burr each define a respective substantially planar grinding surface; the grinding surfaces face each other; the planes defined by the grinding surfaces of the burrs are parallel to each other and perpendicular to the rotational axis; a proximal (i.e. a first end) end of the drive shaft is connected to the drive motor via a gearbox; and the apparatus defines an upper drive shaft bearing assembly within which is rotationally supported a distal (i.e., a second or opposite) end of the drive shaft, and a lower bearing within which is rotationally supported a proximal portion of the drive shaft, wherein the lower bearing is in the form of a cylindrical sleeve retained within a housing.

All of the optional features defined and described herein with respect to the first aspect of the invention may form part of the second aspect. Thus, the second aspect may include one or more of the optional features defined herein with respect to the first aspect of the invention.

For example, in an embodiment of the second aspect, the rotationally driven burr is carried by a rotationally driven burr carrier, wherein the burr carrier includes an axially extending body portion which defines a central channel, and a middle or central portion of the drive shaft is located within the central channel such that a distal portion of the drive shaft extends from a first end of the channel and a proximal portion of the drive shaft extends from a second end of the channel. It will be appreciated that the rotationally driven burr carrier is suitably rotationally fixed to the portion of drive shaft located within the central channel of the burr carrier. For example, the rotationally driven burr carrier may be keyed to the middle or central portion of the drive shaft that is located within central channel, or the drive shaft may form a friction fit with or be welded or adhered to the rotationally driven burr carrier.

In the context of the present invention, the proximal portion of the drive shaft is suitably the portion of the drive shaft which is closest to the drive motor.

By having portions of the drive shaft extending from each end of the central channel, the drive shaft may be rotationally supported on each side of the rotationally driven burr carrier. This helps to minimise lateral movement or displacement of the drive shaft relative to the rotational axis. Thus, the portion of the drive shaft which is rotationally supported within the lower bearing may be defined by or form part of the proximal portion of the drive shaft.

The lower bearing housing may be disposed between the gearbox and the rotationally driven burr. Suitably, the lower bearing housing extends from a gearbox housing. It will be appreciated that the gearbox housing houses the gearbox. The lower bearing is suitably fixed relative to the lower bearing housing.

Optionally, the second aspect's distal portion of the drive shaft includes a main body part and a distal end part,
wherein the distal end part has a smaller diameter than the main body part. By reducing the diameter of the distal end of the drive shaft, a smaller bearing may be used to rotationally support the distal end of the drive shaft without compromising the overall strength of the drive shaft.

In an embodiment of the invention, the proximal and central portions of the drive shaft have a diameter of 5mm to 20mm, for example, 10mm to 15mm. Furthermore, the drive shaft is suitably formed from aluminium

In order to reduce friction between the distal end of the drive shaft and the upper drive shaft bearing assembly, the distal end of the drive shaft may include a sleeve, wherein the sleeve suitably has a lower coefficient of friction. Suitably, the sleeve is formed from steel, such as stainless steel.

In an embodiment, the drive shaft may also pass through the rotationally fixed burr, but without engaging it. In other words, the rotationally fixed burr may be carried by a fixed burr carrier which defines an aperture therethrough, and the drive shaft may extend through the aperture defined by rotationally fixed burr carrier and is suitably spaced therefrom. In a further embodiment of the invention, in which the rotationally driven burr carrier includes an axially extending body through which the drive shaft passes, the axially extending body of the rotationally driven burr carrier may also pass through the aperture defined by the rotationally fixed burr carrier.

As noted above, the upper bearing assembly of the second aspect suitably comprises a central body portion which defines therein an aperture that receives the distal end of the drive shaft; an outer locating ring; and a plurality of connecting arms which connect the central body portion to the outer locating ring. The upper bearing assembly of the second aspect may be substantially identical to the support shaft bearing assembly of the first aspect of the invention.

Thus, in an embodiment of the invention, each of the connecting arms is in the form of an inverted V. In other words, the spaced apart ends of each of the connecting arms face towards the drive motor and the apex of each of the connecting arms faces upwards. Suitably, the connecting arms also taper outwards from central body portion to outer locating ring. Thus, the width of the arms may increase from central body portion to outer locating ring. Connecting arms arranged in this way may have other functions than just maintaining the central body portion in the desired position. For example, the connecting arms may prevent or minimise what is known as "pop-corning", where beans or partially ground beans are forced upwards during the grinding process and exit the top of the apparatus. The connecting arms may assist in deflecting such beans or partially ground beans back into the apparatus, for example towards the grinding chamber of the apparatus within which the grinding burrs are located. Additionally or alternatively, the connecting arms may reduce noise from the grinding process by reflecting or deflecting the sound waves from the apparatus that are generated during the grinding process.

The apparatus of the second aspect may further include a bean hopper having an inverted conical surface which slopes towards the central body portion of the upper bearing, and a bean directing channel surface, wherein the bean directing channel surface is arranged to be parallel to an outwardly facing surface of the central body portion; and wherein the bean directing channel surface and the outwardly facing surface of the central body portion together define a bean inlet channel.

Suitably, a gap between the outwardly facing surface of the central body portion and the bean directing channel surface is constant. Thus, the bean inlet channel may have a substantially constant width, where the width is the gap between the bean directing surface and the outwardly facing surface of the central body portion. In such embodiments, the conical surface of the bean hopper directs the beans to be ground towards the centre of the hopper and the bean inlet channel controls the flow of beans from the hopper to the grinding chamber.

The grinding burrs of the second aspect may be as defined in the first aspect of the invention, including any embodiments or optional features thereof.

For example, in the second aspect, the rotationally fixed burr may be carried by a rotationally fixed burr carrier. In a further embodiment, the rotationally fixed burr carrier is connected to the upper bearing assembly; wherein the rotationally fixed burr carrier, the rotationally fixed burr and the upper bearing together define a fixed burr sub-assembly. Again, such an arrangement permits a quick and easy replacement of the fixed burr.

An embodiment of the invention will now be described, by way of example only, with reference to the accompanying drawings in which:
Figure 1 is a perspective view of a bean grinding apparatus according to the first aspect of the invention;
Figure 2 is a cross-sectional view of the bean grinding apparatus shown in Figure 1;
Figure 3 is a perspective view of a lower burr carrier which forms part of the bean grinding apparatus shown in Figure 1;
Figure 4 is a perspective view of the lower burr carrier shown in Figure 3 with a lower grinding burr secured thereto;
Figure 4a is a perspective view of the lower burr carrier shown in Figure 4, with the bean guide element removed to show the keying arrangement;
Figure 5 is a perspective view from below of the lower burr carrier shown in Figure 4;
Figure 6 is a perspective view from above of an upper burr carrier and top mount which forms part of the bean grinding apparatus shown in Figure 1;
Figure 7 is a perspective view from below of the upper burr carrier shown in Figure 6;
Figure 8 is a perspective view of two pairs of grinding burrs and their associated burr carriers that may be provided as part of the apparatus shown in Figure 1;
Figure 9 is a cross-sectional view through a bean grinding apparatus according to the second aspect, which is not part of the present invention;
Figure 10 is a perspective view of a lower burr carrier which forms part of the bean grinding apparatus shown in Figure 9;
Figure 11 is a perspective view of the lower burr carrier shown in Figure 10 with a lower grinding burr secured thereto; and
Figure 12 is a perspective view of two pairs of grinding burrs and their associated burr carriers that may be provided as part of the apparatus shown in Figure 9.

For the avoidance of doubt, the skilled person will appreciate that in this specification, the terms "up", "down", "front", "rear", "upper", "lower", "width", etc. refer to the orientation of the components as found in the example when installed for normal use as shown in the Figures.

As shown in the drawings, a bean grinding apparatus 2 includes a body 4 within which is housed an upper, rotationally fixed grinding burr 6 and a complementary lower, rotationally driven grinding burr 8. The burrs 6, 8 are commercially available from Italmill Grinding Technology S.r.l, for example.

The lower burr 8, also referred to as a rotationally driven burr 8, is carried on a drive shaft 10, which is rotationally supported in a lower bearing 12, also referred to as a drive shaft bearing 12. The drive shaft 10 defines a rotational axis of the lower burr 8. An upper bearing 14, also referred to as a support shaft bearing assembly 14, is defined within a top mount 16 which is described in more detail below.

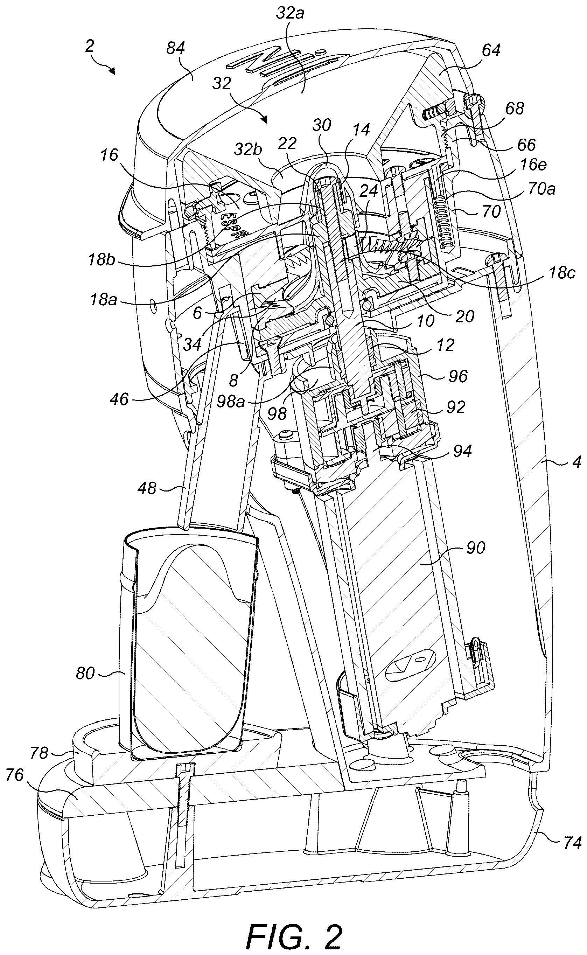

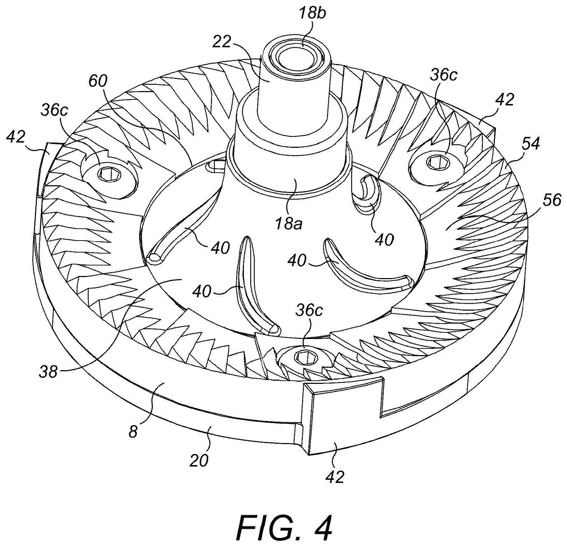

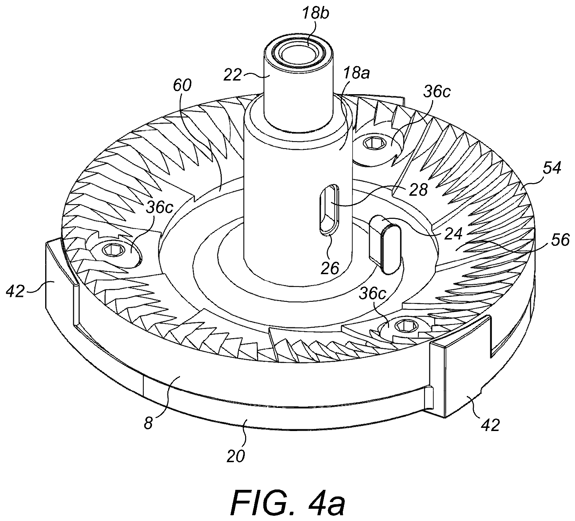

As shown in Figures 2, 4 and 4a, the lower burr 8 is carried by a lower burr carrier 20, also referred to as a rotationally driven burr carrier 20. The lower burr carrier 20 includes an axially upward projecting support shaft portion 18. The support shaft portion 18, also referred to as a support shaft 18, comprises a proximal cylindrical part 18a and a distal cylindrical part 18b, also referred to as a distal end 18b, wherein the diameter of the distal cylindrical part 18b is smaller than the diameter of the proximal cylindrical part 18a. The distal cylindrical part 18b is intended to be rotatably received within the upper bearing 14. However, as the lower burr carrier is formed from aluminium, a sleeve 22 formed from stainless steel surrounds the distal cylindrical part 18b, as this results in a lower coefficient of friction within the upper bearing 14.

Referring to Figures 2 and 4a, a keying element 24 is located within a slot 26 defined by the proximal cylindrical portion 18a of the support shaft portion 18 and a corresponding slot 28 defined by the drive shaft 10. In this way, the lower burr carrier 20 is rotationally locked relative to the drive shaft 10.

In order to further secure the support shaft portion 18 to the drive shaft 10, a screw 18c passes through the distal end of the support shaft portion 18 and is threadedly coupled to an internal thread defined by a distal end portion of the drive shaft 10.

A central portion 30 of the top mount 16 is conical in shape and is located within a bean hopper 32. The central portion 30 of the top mount 16 defines three apertures 16b via which beans may exit the hopper 32 and descend under the action of gravity into a grinding chamber 34. The central portion 30 further defines on its underside the upper bearing 14 in which is rotatably received the distal cylindrical part 18b of the support shaft portion 18 and its associated sleeve 22. The bean hopper 32 has a first inclined portion 32a which slopes downwardly towards a central aperture defined by the hopper 32. It also has a second inclined portion 32b, also referred to as a bean direction channel surface 32b, which is arranged to be parallel to the conical central portion 30 of the top mount 16. The second inclined portion 32b defines an undercut relative to the first portion 32a of the hopper 32. By having the second inclined portion 32b of the hopper 32 arranged parallel to the conical central portion 30 of the top mount, an inclined bean inlet channel is defined between the second inclined portion 32b of the hopper 32 and the conical central portion 30 of the top mount. The inclined bean inlet channel reduces the risk of "pop-corning".

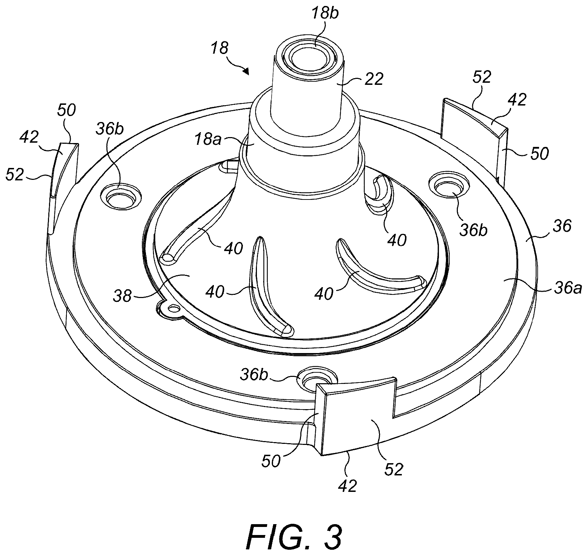

The lower burr carrier 20 is shown in more detail in Figures 3, 4 and 4a. In addition to the axially projecting support shaft portion 18 discussed above, the lower burr carrier includes a lower burr support platform 36 which defines a raised central boss 36a and three threaded screw holes 36b. The lower burr 8 is supported by the platform 36 and secured thereto via three screws 36c (shown in Figure 4) which pass through the lower burr 8 and into the threaded bores 36b.

A central portion of the platform 36 carries a bean guide element 38, also referred to as a guide portion 38, which in turn defines five curved guide fins 40, also referred to as guide ribs 40. The fins 40 are arranged such when the lower burr carrier 20 is rotated by the drive shaft 10 (in a clockwise sense), the upper part of the guide fins 40 is the leading edge and the lower part of the guide fins 40 is swept backwards relative to the direction of rotation. In this way, the beans are guided or urged radially outwards from the axially projecting body 18.

In addition to guiding the beans radially outwards, the bean guide element 38 also covers the keying element 24 and prevents it from disengaging from the slots 26, 28. Thus, the bean guide element 38 also secures the keying element 24 in place.

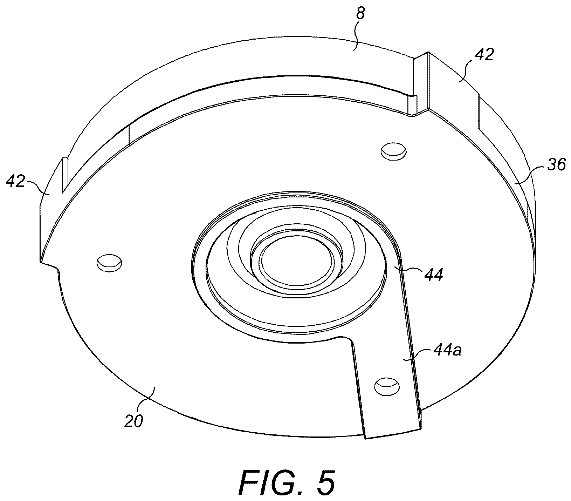

In addition to the bean guide element 38, the lower burr carrier 20 also includes three upstanding, radially projecting first grind sweepers 42; and a second grind sweeper 44, also referred to as first grounds directing element 44, (shown in Figure 5) which extends axially downwards from a bottom surface of the lower burr carrier 20. The second grind sweeper 44 includes a rearwardly swept (i.e., rearwards with respect to a direction of rotation) outwardly projecting finger 44a which extends from the second grind sweeper 44 towards a peripheral edge portion of the lower burr carrier 20. The projecting finger 44a generates an airflow beneath the lower burr carrier 20 and the generated airflow sweeps the grounds that enter a lower portion of the grinding chamber 34 (i.e., below the lower burr carrier 20) outwards towards an exit port 46 from the grinding chamber 34 and an exit spout 48 in communication with the grinding chamber 34 via the exit port 46.

Each of the first grind sweepers 42 includes a leading face 50 and a trailing face 52. The leading face 50 is angled rearwards (relative to the direction of rotation) from the radius of the lower burr carrier 20 by an angle of 20°. This angle prevents bean grinds from accumulating on the leading face 50.

Figure 4 shows the lower burr carrier 20 with the lower burr 8 attached thereto via the screws 36c. As can be seen from Figure 4, the lower burr 8 includes a planar grinding surface 54 which is arranged perpendicular to the rotational axis defined by the drive shaft 10. Radially inwardly of the planar grinding surface is located a pre-grind portion 56 of the lower burr 8. The pre-grind portion 56 is frustoconical in shape. The lower burr 8 further defines a central aperture 60 within which is located the bean guide element 38. Finally, the lower burr 8 defines three countersunk screw holes 58 which align with the threaded bores 36b defined by the lower burr carrier 20. The countersunk holes 58 allow the screws 36c to be inserted to secure the lower burr 8 to the lower burr carrier 20 without the screw heads interfering with the grinding surfaces defined by the planar grinding surface 54 and the frustoconical pre-grind surface 56.

Figure 4a shows the lower burr carrier 20 with the lower burr 8 attached thereto, but without the bean guide element. This figure shows the arrangement of the keying element 24 and the two aligned slots 26, 28.

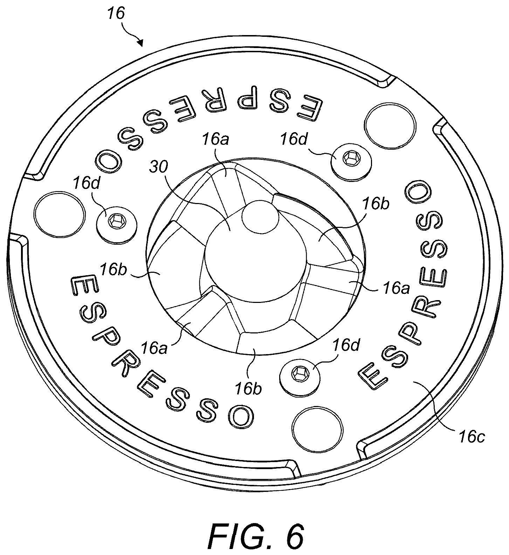

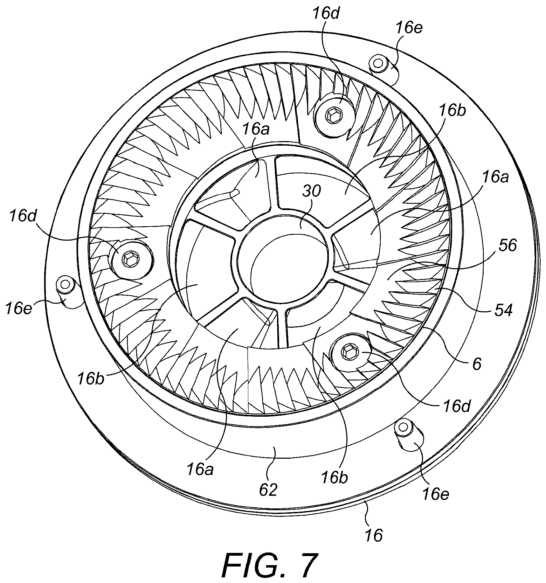

Figures 6 and 7 show the top mount 16 in more detail. An upper burr carrier 62, also referred to as a fixed burr carrier 62, is secured to a downwardly facing surface of the top mount 16. The upper burr 6 (shown in Figure 7) is screwed to the downwardly facing surface of the upper burr carried in the same way that the lower burr 8 is secured to the lower burr carrier 20.

The top mount 16 includes an annular body portion 16c which is coupled to the conical central portion 30 via three arms 16a, each of the arms being also referred to as connecting arm 16a. The gaps between adjacent arms 16a define the apertures 16b through which the beans fall when transiting from the hopper 32 to the grinding chamber 34. The arms 16a are angled such that they form an inverted V shape when viewed from above. In addition, the width of the arms 16a increases from the central conical section 30 to the annular body portion 16c. This V-shape of the arms 16a minimises or reduces "pop-corning" of the unground or partially ground beans from the grinding chamber 34 located below the top mount 16. It also reduces noise emitted from the grinding chamber.

Screws 16d secure together the top mount 16, the upper burr carrier 62 and the upper burr 6.

The top mount further includes locating lugs 16e which project downwards from a lower surface of the annular body 16c. The locating lugs 16e pass through corresponding holes defined by the upper burr carrier 62 and project away from the upper burr carrier. The locating lugs 16e are received by corresponding pockets 70 defined by the body 4.

It will be appreciated that the upper burr 6 and the lower burr 8 are identical and are arranged within the apparatus to face each other such that the pre-grind portions 56 of both burrs 6, 8 face each other and together define a funnel which tapers towards the planar grinding surfaces 54, which also face each other.

As noted herein, the upper burr 6 is rotationally fixed, but axially adjustable relative to the lower burr 8. In summary, the hopper 32 is defined by a rotatable body 64 which is threadedly coupled to a portion 66 of the apparatus body 4. As the rotatable body 64 is rotated relative to the body 4, a lower portion 68 of the rotatable body moves up or down in a direction parallel to the rotational axis of the drive shaft 10. The top mount 16 is urged against the lower portion 68 of the rotatable body 64 by springs 70a which are located in pockets 70 defined by the body 4 (only one pocket 70 and respective spring 70a is shown in Figure 2). In this way, as the lower portion 68 of the rotatable body 64 moves up or down when it is rotated relative to the body 4, the top mount 16 also moves up or down by a corresponding distance. As the upper burr carrier 62 is secured to the top mount 16 and the upper burr 6 is secured to the upper burr carrier 62, the upper burr is moved towards or away from the lower burr 8 when the rotatable body 64 is rotated relative to the body 4.

The grounds from the burrs 6, 8 are urged radially outwards and are swept into the exit port 46 by the first grind sweepers 42. Any grounds that fall below the lower burr carrier 20 are swept into the exit port 46 by the airflow generated by the second grind sweeper 44. Momentum and gravity carry the grounds from the exit port 46 into the exit spout 48.

The exit spout 48 has a longitudinal axis which is angled from a vertical plane by 10° in a direction opposite to that of the rotational axis defined by the drive shaft 10 (which itself is angled from the vertical plane by 15°) such that the longitudinal axis of the exit spout 48 is angled from the rotational axis by 25°.

The spout 48 defines a grounds flow path from the grinding apparatus. It will be noted that the rotational axis and the grounds flow path form an invented V shape.

A lower body portion 72 of the body 4 has a base 74 fitted beneath it, which projects forwards to underlie the spout 48. The base 74 and the body 4 define an inverted "7" shape.

The base 74 has a two-part stand 76, 78 for a grounds collection cup 80. With the cup 80 on the stand 76, 78 beneath a distal end of the spout 48, it is able to collect the grounds.

In order to avoid the problem of static charge accumulation by the grounds, the stand 76, 78 is made from wood and the base 74 is provided with feet 74a also made of wood. It has been found that the electrostatic effect which causes the grounds to adhere to the apparatus 2 or to become fly-away is diminished or removed altogether by forming the stand 76, 78 and the feet 74a of wood.

Experiments utilising the embodiment of the invention described herein demonstrated that 10g of grounds could be obtained from 10g of beans.

An upper body portion 82 includes a lid 84 that is pivotally mounted to the upper body portion 82 via a hinge 86 such that the lid 84 is capable of covering the bean hopper 32 and the rotatable body 64 in a closed configuration. The lid 84 carries a magnet and the upper body 82 carries a steel insert which is aligned with the magnet in the closed configuration. The magnetic attraction between the magnet and the steel insert in the closed configuration latches the lid 84 it the closed configuration.

The lid 84 further includes a projection element. In the closed configuration, the projection element engages a plunger, which in turn is connected to a micro-switch such that in the closed configuration, the micro-switch is activated (i.e., closed), which in turn permits operation of the grinder. When the lid 84 is opened (i.e., hinged out of its closed configuration), the projection element is disengaged from the plunger, which in turn opens the micro-switch. The opening of the micro-switch interrupts power to the motor and the grinding apparatus 2 becomes inoperable. This arrangement prevents the grinding apparatus 2 being operated with the lid 84 in an open configuration.

The lid 84 is formed from a transparent polymeric material so that the quantity of beans in the bean hopper 32 is visible to the user.

Within the body 4 is located an electric motor 90 and a reduction gearbox 92. The reduction gearbox 92 reduces the rotational speed of a motor output shaft 94 such that the drive shaft 10, which is operatively coupled to the gearbox 92 has a rotational speed of about 530rpm. This has been found to be a suitable speed for the operation of the grinding burrs in terms of grinding efficiency, noise and vibration of the apparatus 2.

The gears of the gearbox 92 are housed within a gearbox housing 96. The gearbox housing 96 includes a top cover 98, which in turn defines a lower bearing housing 98a that extends axially upwards from the top cover 98. The lower bearing housing 98a houses the lower bearing 12.

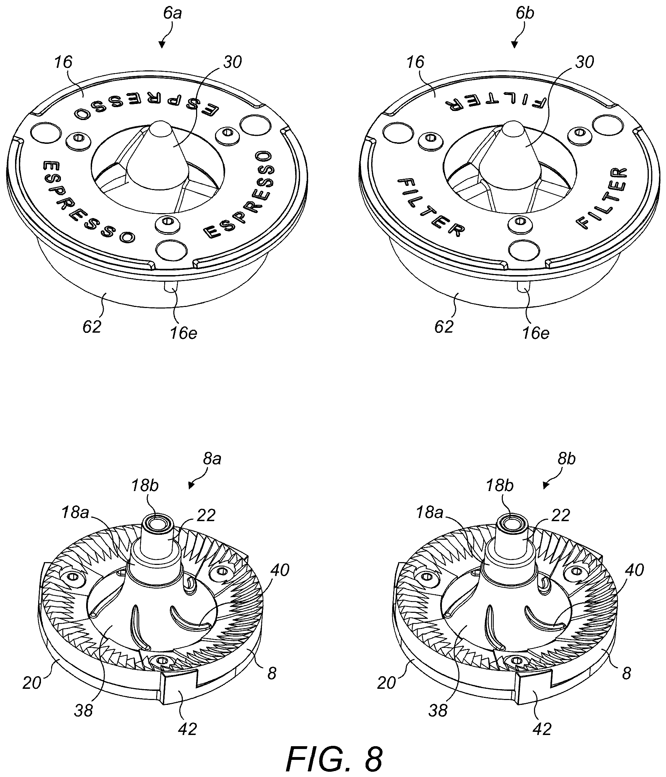

Figure 8 shows two pairs of matched grinding burrs 6a, 8a and 6b, 8b. A user of the apparatus 2 is able to replace a first pair of grinding burrs 6a, 8a with a second different pair of grinding burrs 6b, 8b. For example, as shown in Figure 8, the first pair of burrs 6a, 8a may produce a finer grind than that produced by the second pair of burrs 6b, 8b. Thus, the first pair of burrs 6a, 8a may be used for preparing coffee grounds for espresso machines, for example; and the second pair of burrs 6b, 8b may be used for preparing coffee grounds for filter coffee machines, for example.

The process of replacing the grinding burrs 6, 8 is relatively straightforward. The user first unscrews the rotatable body 64 from the body 4. This removes the bean hopper 32 from the apparatus 2 and permits access to the top mount 16, which can then be removed from apparatus, together with the upper burr carrier 62 and the first upper burr 6a, by lifting it upwards. When the rotatably body 64 is removed from the body 4, the springs 70a located in the pockets 70 urge the top mount 16 upwards via the locating lugs 16e.

With the top mount 16 removed, the screw 18c may be unscrewed and bean guide element 38 may be removed, which then permits removal of the keying element 24 from the slots 26, 28. This permits the lower burr carrier 20 and the associated first lower burr 8a to be slid axially from the drive shaft 10.

The process of installing the second pair of grinding burrs 6b, 8b is the reverse of the above steps. Thus, the lower burr carrier 20 and associated second lower burr 8b is axially slid onto the drive shaft 10. The lower burr carrier is then keyed to the drive shaft 10 by the keying element 24, which is secured in place by the bean guiding element 38. The lower burr carrier is secured to the drive shaft 10 by threadedly engaging the screw 18c with the internal thread carried by the distal end of the drive shaft 10. The top mount 16 is then located in position by placing the locating lugs 16e in the respective pockets 70 defined by the body 4. As noted above, the top mount 16 has coupled to it the upper burr carrier 62 and the second upper burr 6b. The top mount 16 is then secured in place by screwing the rotating body 64 to the body 4. This compresses the springs 70a located within the pockets 70.

With the top mount 16 coupled to the body 4, the distal cylindrical part 18b and its associated sleeve 22 are rotatably disposed within the bearing 14 defined within the central portion 30 of the top mount 16.

In use, a user opens the transparent lid 84, which inactivates the electric motor 90 as discussed above. The desired quantity of beans is located within the hopper 32 and the lid 84 is closed. The closing of the lid permits activation of the motor.

The motor is activated, which drives the drive shaft 10 to rotate via the gearbox 92, which in turn causes the lower burr 8 to rotate. The beans fall into the grinding chamber 34 via the inclined bean inlet channel that is defined between the second inclined portion 32b of the hopper 32 and the conical central portion 30 of the top mount 16. The curved fins 40 of the bean guide element 38 direct the beans towards the pre-grind portion 56 of the burrs 6, 8. The beans are then ground between the substantially planar grinding faces 54 of the burrs 6, 8. The bean grounds are then directed to the outlet port 46 of the apparatus 2 by the action of the first and second grind sweepers 42, 44. The beans then enter the exit spout 48, where they fall into the grinds collecting cup 80 under the action of gravity.

When the beans placed within the hopper 32 have all been ground, the motor may be manually stopped.

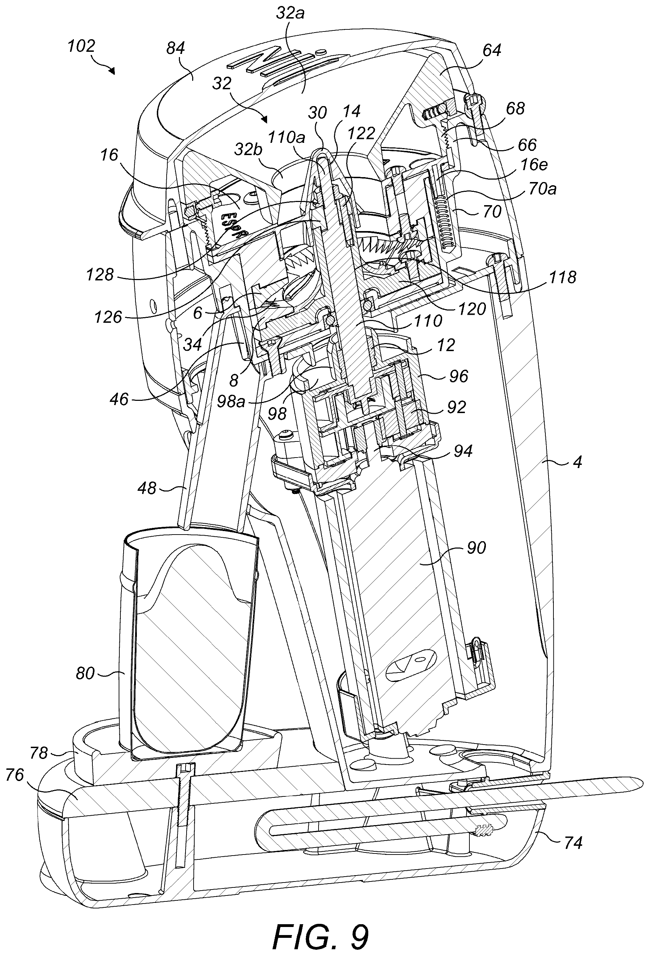

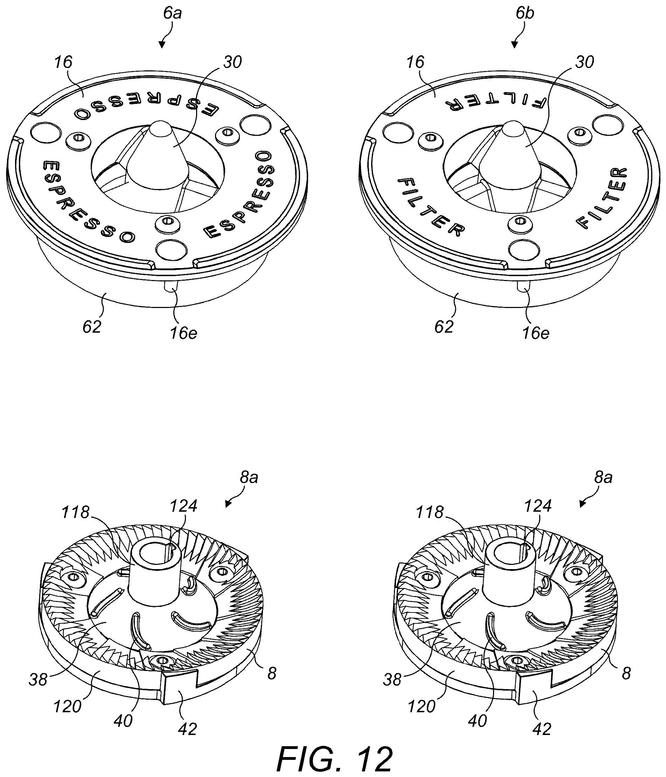

A second embodiment of a bean grinding apparatus 102, which is not part of the present invention, is shown in Figures 9 to 12. In this second embodiment, the drive shaft 10 and the axially projecting support shaft 18 of the first embodiment are replaced with a single drive shaft 110 which passes through a lower burr carrier 120.

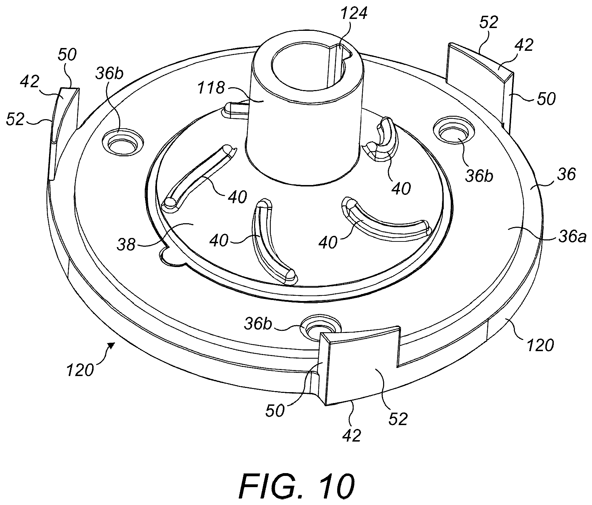

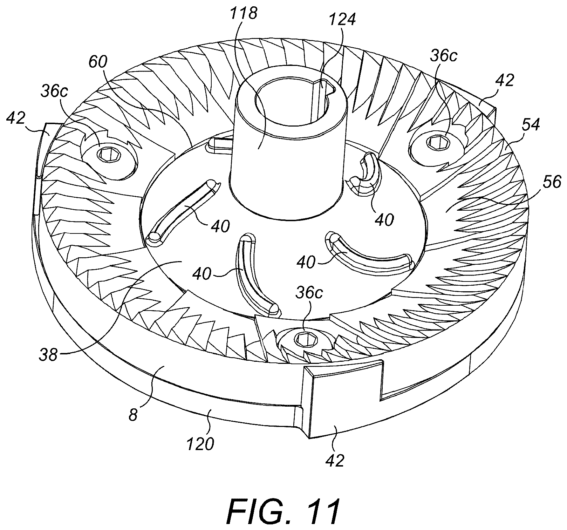

As shown in Figure 9, an upper portion 110a of the drive shaft 110 has a reduced diameter and includes a threaded portion. This permits an axially projecting body portion 118 of the lower burr carrier 120 (shown in more detail in Figures 10 and 11) to be keyed to the drive shaft 110 via a keying element 122. A lower part of the keying element 122 is partially located within a slot 124 defined by the axially projecting body portion 118 of the lower burr carrier 120 and partially located within a corresponding slot defined by the drive shaft 110. An upper part of the keying element 122 is located within a slot defined within a cylindrical keying element holder 126, which is secured to the upper portion of the drive shaft 110 via a top nut 128, which is threadedly engaged with the screw thread carried by the upper portion 110a of the drive shaft 110.

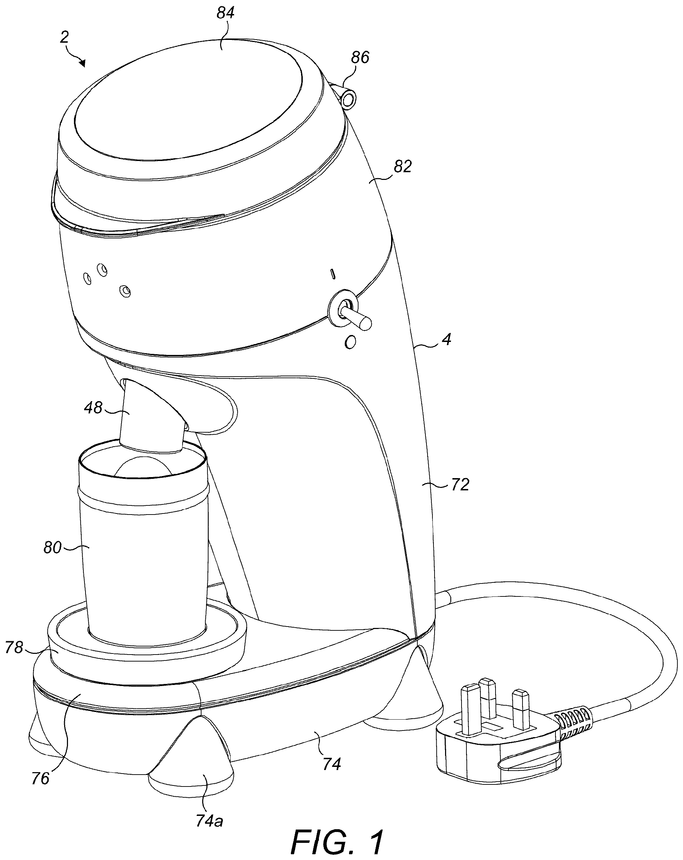

All of the remaining features of the bean grinding apparatus 102 are identical to the corresponding features described above in connection with Figures 1 to 8 and the same reference numerals for these features are used in Figures 9 to 12.

## Claims

1. A bean grinding apparatus (2) comprising a body (4); a pair of opposed grinding burrs (6,8) mounted in the body, the burrs comprising a rotationally fixed burr (6) and a rotationally driven burr (8), the rotationally driven burr having a rotational axis about which it rotates; a drive motor (90) operatively coupled to the rotationally driven burr via a drive shaft (10); a grounds flow path defined within the body; and an exit spout, the exit spout (48) having an inlet in communication with the grounds flow path and an outlet; wherein the rotationally fixed burr and the rotationally driven burr each define a respective substantially planar grinding surface; the grinding surfaces face each other; the planes defined by the grinding surfaces of the burrs are parallel to each other and perpendicular to the rotational axis; a proximal end of the drive shaft is connected to the drive motor via a gearbox (92); and deflection of the rotationally driven burr relative to the rotational axis is resisted on one side by the drive shaft being supported within a drive shaft bearing (12), and on the opposite side by a support shaft (18) which extends from the rotationally driven burr, wherein a distal end (18b) of the support shaft is supported within a support shaft bearing assembly (14) carried by the body; wherein the support shaft bearing assembly comprises a central body portion (30) which defines therein a bore that rotatably receives therein the distal end portion of the support shaft; an outer locating ring; and a plurality of connecting arms (16a) which connect the central body portion to the outer locating ring.

2. A bean grinding apparatus according to Claim 1, wherein the rotationally driven burr is carried by a rotationally driven burr carrier (20), wherein the burr carrier includes a body portion which defines a central channel, and a distal portion of the drive shaft is located within the central channel; optionally wherein the support shaft extends from the body portion of the rotationally driven burr carrier.

3. A bean grinding apparatus according to Claim 1 or Claim 2, wherein the support shaft includes a main body portion (18a), and wherein the distal end portion has a smaller diameter than the main body portion.

4. A bean grinding apparatus according to any of Claims 1 to 3, wherein the distal end portion of the support shaft includes a sleeve (22) fixed thereto,

5. A bean grinding apparatus according to any of Claims 1 to 4, wherein each of the connecting arms is in the form of an inverted V.

6. A bean grinding apparatus according to any of Claims 1 to 5, wherein the apparatus further includes a bean hopper (32) having a conical surface which slopes towards the central body portion of the support shaft bearing assembly, and a bean directing channel surface (32b), wherein the bean directing channel surface is arranged to be parallel to an outwardly facing surface of the central body portion; and wherein the bean directing channel surface and the outwardly facing surface of the central body portion together define a bean inlet channel and the gap between the outwardly facing surface of the central body portion and the bean directing channel surface is constant.

7. A bean grinding apparatus according to any of Claims 1 to 6, wherein the rotationally fixed burr and the rotationally driven burr each have a circular cross section, wherein the substantially planar grinding surface of each burr is disposed around a peripheral edge portion of the respective burr; optionally wherein the rotationally fixed burr and the rotationally driven burr each include a pre-grind portion disposed radially inwards of the grinding surface, and the pre-grind portion tapers to the grinding surface.

8. A bean grinding apparatus according to any of Claims 2 to 7, wherein the rotationally driven burr carrier includes a guide portion (38) disposed radially inwards of rotationally driven burr, wherein the guide portion includes one or more guide ribs (40) which guide unground beans towards the rotationally driven burr; optionally wherein the guide ribs are curved.

9. A bean grinding apparatus according to any of Claims 1 to 8, wherein a rotationally fixed burr carrier carries the rotationally fixed burr.

10. A bean grinding apparatus according to any of Claims 1 to 9, wherein the apparatus further includes a first grounds directing element (44) located below the burrs, wherein the first grounds directing element includes one or more fingers (44a) which generates an airflow to sweep the grounds into the grounds flow path.

11. A bean grinding apparatus according to Claim 10, wherein the apparatus defines a cavity below the burrs and the first grounds directing element is located within the cavity.

12. A bean grinding apparatus according to any of Claims 1 to 11, wherein the apparatus further includes a rotationally fixed burr adjustment mechanism which adjusts the axial location of the rotationally fixed burr relative to the rotationally driven burr.

13. A bean grinding apparatus according to Claim 12, wherein the rotationally fixed burr is carried by a fixed burr carrier (62); the fixed burr carrier includes a first threaded part; and
the apparatus includes a rotatable second threaded part which is threadedly engaged with the first threaded part, wherein rotation of the second threaded part results in displacement of the fixed burr carrier in an axial direction relative to the rotational axis.

14. A bean grinding apparatus according to any of Claims 1 to 23, wherein the exit spout defines a longitudinal axis and the longitudinal axis of the exit spout is angled with respect to the rotational axis of the rotationally driven burr; optionally wherein both the rotational axis and the longitudinal axis of the exit spout are angled with respect to a vertical plane; optionally wherein the rotational axis and the longitudinal axis of the exit spout form an inverted V.

15. A bean grinding apparatus according to any of Claims 1 to 14, wherein the apparatus further includes a second rotationally fixed burr and a second rotationally driven burr, wherein the first rotationally fixed burr and the first rotationally driven burr are replaceable by the second rotationally fixed burr and the second rotationally driven burr.

## Patentansprüche

1. Bohnenmahlvorrichtung (2), umfassend einen Körper (4); ein Paar gegenüberliegender Mahlwerke (6, 8), die in dem Körper montiert sind, wobei die Mahlwerke ein drehfestes Mahlwerk (6) und ein drehangetriebenes Mahlwerk (8) umfassen, wobei das drehangetriebene Mahlwerk eine Drehachse aufweist, um die es sich dreht; einen Antriebsmotor (90), der über eine Antriebswelle (10) operativ an das drehangetriebene Mahlwerk gekoppelt ist; einen innerhalb des Körpers definierten Mahlgutströmungsweg; und eine Auslauftülle (48), wobei die Auslauftülle einen Einlass in Kommunikation mit dem Mahlgutströmungsweg und einen Auslass aufweist; wobei das drehfeste Mahlwerk und der drehangetriebene Mahlwerk jeweils eine jeweilige, im Wesentlichen planare Mahlfläche definieren; die Mahlflächen einander zugewandt sind; die von den Mahlflächen der Mahlwerke definierten Ebenen parallel zueinander und senkrecht zu der Drehachse sind; ein proximales Ende der Antriebswelle über ein Getriebe (92) mit dem Antriebsmotor verbunden ist; und einer Ablenkung des drehangetriebenen Mahlwerks relativ zu der Drehachse auf einer Seite durch die Antriebswelle, die innerhalb eines Antriebswellenlagers (12) gestützt wird, und auf der gegenüberliegenden Seite durch eine Stützwelle (18), die sich von dem drehangetriebenen Mahlwerk erstreckt, widerstanden wird, wobei ein distales Ende (18b) der Stützwelle innerhalb einer von dem Körper getragenen Stützwellenlageranordnung (14) gestützt wird; wobei die Stützwellenlageranordnung einen zentralen Körperabschnitt (30) umfasst, der darin eine Bohrung definiert, die darin den distalen Endabschnitt der Stützwelle drehbar aufnimmt; einen äußeren Zentrierring; und eine Vielzahl von Verbindungsarmen (16a), die den zentralen Körperabschnitt mit dem äußeren Zentrierring verbinden.

2. Bohnenmahlvorrichtung nach Anspruch 1, wobei das drehangetriebene Mahlwerk von einem drehangetriebenen Mahlwerkträger (20) getragen wird, wobei der Mahlwerkträger einen Körperabschnitt beinhaltet, der einen zentralen Kanal definiert, und ein distaler Abschnitt der Antriebswelle innerhalb des zentralen Kanals befindlich ist; optional, wobei sich die Stützwelle von dem Körperabschnitt des drehangetriebenen Mahlwerkträgers erstreckt.

3. Bohnenmahlvorrichtung nach Anspruch 1 oder Anspruch 2, wobei die Stützwelle einen Hauptkörperabschnitt (18a) beinhaltet und wobei der distale Endabschnitt einen kleineren Durchmesser als der Hauptkörperabschnitt aufweist.

4. Bohnenmahlvorrichtung nach einem der Ansprüche 1 bis 3, wobei der distale Endabschnitt der Stützwelle eine daran befestigte Hülse (22) beinhaltet.

5. Bohnenmahlvorrichtung nach einem der Ansprüche 1 bis 4, wobei jeder der Verbindungsarme in Form eines umgekehrten V vorliegt.

6. Bohnenmahlvorrichtung nach einem der Ansprüche 1 bis 5, wobei die Vorrichtung ferner einen Bohnenbehälter (32) mit einer konischen Oberfläche, die zu dem zentralen Körperabschnitt der Stützwellenlageranordnung hin geneigt ist, und eine Bohnenleitkanaloberfläche (32b) beinhaltet, wobei die Bohnenleitkanaloberfläche so angeordnet ist, dass sie parallel zu einer nach außen weisenden Oberfläche des zentralen Körperabschnitts ist; und wobei die Bohnenleitkanaloberfläche und die nach außen weisende Oberfläche des zentralen Körperabschnitts zusammen einen Bohneneinlasskanal definieren und der Spalt zwischen der nach außen weisenden Oberfläche des zentralen Körperabschnitts und der Bohnenleitkanaloberfläche konstant ist.

7. Bohnenmahlvorrichtung nach einem der Ansprüche 1 bis 6, wobei das drehfeste Mahlwerk und das drehangetriebene Mahlwerk jeweils einen kreisförmigen Querschnitt aufweisen, wobei die im Wesentlichen planare Mahlfläche jedes Mahlwerks um einen Umfangskantenabschnitt des jeweiligen Mahlwerks herum angeordnet ist; optional, wobei das drehfeste Mahlwerk und das drehangetriebene Mahlwerk jeweils einen Vormahlabschnitt beinhalten, der radial einwärts der Mahlfläche angeordnet ist, und der Vormahlabschnitt sich hin zu der Mahlfläche verjüngt.

8. Bohnenmahlvorrichtung nach einem der Ansprüche 2 bis 7, wobei der drehangetriebene Mahlwerkträger einen Führungsabschnitt (38) beinhaltet, der radial einwärts des drehangetriebenen Mahlwerks angeordnet ist, wobei der Führungsabschnitt eine oder mehrere Führungsrippen (40) beinhaltet, die ungemahlene Bohnen zu dem drehangetriebenen Mahlwerk hin führen; optional, wobei die Führungsrippen gekrümmt sind.

9. Bohnenmahlvorrichtung nach einem der Ansprüche 1 bis 8, wobei ein drehfester Mahlwerkträger das drehfeste Mahlwerk trägt.

10. Bohnenmahlvorrichtung nach einem der Ansprüche 1 bis 9, wobei die Vorrichtung ferner ein erstes Mahlgutleitelement (44) beinhaltet, das sich unterhalb der Mahlwerke befindet, wobei das erste Mahlgutleitelement einen oder mehrere Finger (44a) beinhaltet, wodurch ein Luftstrom erzeugt wird, um das Mahlgut in den Mahlgutströmungsweg zu fegen.

11. Bohnenmahlvorrichtung nach Anspruch 10, wobei die Vorrichtung einen Hohlraum unterhalb der Mahlwerke definiert und sich das erste Mahlgutleitelement innerhalb des Hohlraums befindet.

12. Bohnenmahlvorrichtung nach einem der Ansprüche 1 bis 11, wobei die Vorrichtung ferner einen Einstellmechanismus für das drehfeste Mahlwerk beinhaltet, der die axiale Lage des drehfesten Mahlwerks relativ zu dem drehangetriebenen Mahlwerk einstellt.

13. Bohnenmahlvorrichtung nach Anspruch 12, wobei das drehfeste Mahlwerk von einem festen Mahlwerkträger (62) getragen wird; der feste Mahlwerkträger einen ersten Gewindeteil beinhaltet; und die Vorrichtung einen drehbaren zweiten Gewindeteil beinhaltet, der in Gewindeeingriff mit dem ersten Gewindeteil steht, wobei eine Drehung des zweiten Gewindeteils in einer Verschiebung des festen Mahlwerkträgers in einer axialen Richtung relativ zu der Drehachse resultiert.

14. Bohnenmahlvorrichtung nach einem der Ansprüche 1 bis 23, wobei die Auslauftülle eine Längsachse definiert und die Längsachse der Auslauftülle in Bezug auf die Drehachse des drehangetriebenen Mahlwerks angewinkelt ist; optional, wobei sowohl die Drehachse als auch die Längsachse der Auslauftülle in Bezug auf eine vertikale Ebene angewinkelt sind; optional, wobei die Drehachse und die Längsachse der Auslauftülle ein umgekehrtes V bilden.

15. Bohnenmahlvorrichtung nach einem der Ansprüche 1 bis 14, wobei die Vorrichtung ferner ein zweites drehfestes Mahlwerk und ein zweites drehangetriebenes Mahlwerk beinhaltet, wobei das erste drehfeste Mahlwerk und das erste drehangetriebene Mahlwerk durch das zweite drehfeste Mahlwerk und das zweite drehangetriebene Mahlwerk ersetzbar sind.

## Revendications

1. Appareil de broyage de grains (2) comprenant un corps (4) ; une paire de fraises de broyage (6, 8) opposées, montées dans le corps, les fraises comprenant une fraise fixe en rotation (6) et une fraise entraînée en rotation (8), la fraise entraînée en rotation comportant un axe de rotation autour duquel elle tourne ; un moteur d'entraînement (90) accouplé de manière fonctionnelle à la fraise entraînée en rotation par l'intermédiaire d'un arbre d'entraînement (10) ; une voie d'écoulement de marc défini à l'intérieur du corps ; et un bec de sortie (48), le bec de sortie comportant une entrée en communication avec la voie d'écoulement de marc et une sortie ; la fraise fixe en rotation et la fraise entraînée en rotation définissant chacune une surface de broyage sensiblement plane respective ; les surfaces de broyage se faisant face mutuellement ; les plans définis par les surfaces de broyage des fraises étant parallèles entre eux et perpendiculaires à l'axe de rotation ; une extrémité proximale de l'arbre d'entraînement étant reliée au moteur d'entraînement par l'intermédiaire d'une boîte d'engrenages (92) ; et une déviation de la fraise entraînée en rotation par rapport à l'axe de rotation étant contrecarrée, d'un côté, par l'arbre d'entraînement soutenu dans un palier d'arbre d'entraînement (12) et, du côté opposé, par un arbre de soutien (18) qui s'étend depuis la fraise entraînée en rotation, une extrémité distale (18b) de l'arbre de soutien étant soutenue dans un ensemble palier d'arbre de soutien (14) supporté par le corps ; l'ensemble palier d'arbre de soutien comprenant une partie corps central (30) qui y définit un alésage qui y reçoit rotative la partie extrémité distale de l'arbre de soutien ; et une bague de positionnement extérieure ; et une pluralité de bras de liaison (16a) qui relient la partie corps central à la bague de positionnement extérieure.

2. Appareil de broyage de grains selon la revendication 1, la fraise entraînée en rotation étant supportée par un support de fraise entraînée en rotation (20), le support de fraise comprenant une partie corps qui définit un canal central, une partie distale de l'arbre d'entraînement étant située dans le canal central ; éventuellement, l'arbre de support s'étendant depuis la partie corps du support de fraise entraînée en rotation.

3. Appareil de broyage de grains selon la revendication 1 ou 2, l'arbre de soutien comprenant une partie corps principal (18a), et la partie extrémité distale présentant un diamètre inférieur à celui de la partie corps principal.

4. Appareil de broyage de grains selon l'une quelconque des revendications 1 à 3, la partie extrémité distale de l'arbre de soutien comporte un manchon (22) qui y est fixé.

5. Appareil de broyage de grains selon l'une quelconque des revendications 1 à 4, chacun des bras de liaison se présentant sous la forme d'un V inversé.

6. Appareil de broyage de grains selon l'une quelconque des revendications 1 à 5, l'appareil comprenant en outre une trémie à grains (32) présentant une surface conique qui s'incline vers la partie corps central de l'ensemble palier d'arbre de soutien, et une surface formant canal de direction de grains (32b), ladite surface formant canal de direction de grains étant agencée de manière à être parallèle à une surface tournée vers l'extérieur de la partie corps central ; et la surface formant canal de direction de grains et la surface tournée vers l'extérieur de la partie corps central définissant ensemble un canal d'entrée de grains, et l'écart entre la surface tournée vers l'extérieur de la partie corps central et la surface formant canal de direction de grains étant constant.

7. Appareil de broyage de grains selon l'une quelconque des revendications 1 à 6, la fraise fixe en rotation et la fraise entraînée en rotation présentant chacune une section transversale circulaire, la surface de broyage sensiblement plane de chaque fraise étant disposée autour d'une partie bord périphérique de la fraise respective ; éventuellement, la fraise fixe en rotation et la fraise entraînée en rotation comprenant chacune une partie de pré-broyage disposée radialement vers l'intérieur de la surface de broyage, et la partie de pré-broyage s'effilant en direction de la surface de broyage.

8. Appareil de broyage de grains selon l'une quelconque des revendications 2 à 7, le support de fraise entraînée en rotation comprenant une partie de guidage (38) disposée radialement vers l'intérieur de la fraise entraînée en rotation, la partie de guidage comprenant une ou plusieurs nervures de guidage (40) qui guident les grains non broyés vers la fraise entraînée en rotation ; éventuellement, les nervures de guidage étant incurvées.

9. Appareil de broyage de grains selon l'une quelconque des revendications 1 à 8, un support de fraise fixe en rotation supportant la fraise fixe en rotation.

10. Appareil de broyage de grains selon l'une quelconque des revendications 1 à 9, l'appareil comprenant en outre un premier élément de direction de marc (44) situé sous les fraises, le premier élément de direction de marc comprenant un ou plusieurs doigts (44a) qui génèrent un flux d'air pour balayer le marc dans la voie d'écoulement de marc.

11. Appareil de broyage de grains selon la revendication 10, l'appareil définissant une cavité sous les fraises, et le premier élément de direction de marc étant situé à l'intérieur de la cavité.

12. Appareil de broyage de grains selon l'une quelconque des revendications 1 à 11, l'appareil comprenant en outre un mécanisme de réglage de fraise fixe en rotation qui règle l'emplacement axial de la fraise fixe en rotation par rapport à la fraise entraînée en rotation.

13. Appareil de broyage de grains selon la revendication 12, la fraise fixe en rotation étant supportée par un support de fraise fixe (62) ; le support de fraise fixe comprenant une première pièce filetée ; et l'appareil comprenant une seconde pièce filetée rotative qui entre en prise par filetage avec la première pièce filetée, une rotation de la seconde pièce filetée entraînant un déplacement du support de fraise fixe dans une direction axiale par rapport à l'axe de rotation.

14. Appareil de broyage de grains selon l'une quelconque des revendications 1 à 23, le bec de sortie définissant un axe longitudinal et l'axe longitudinal du bec de sortie étant incliné par rapport à l'axe de rotation de la fraise entraînée en rotation ; éventuellement, l'axe de rotation et l'axe longitudinal du bec de sortie étant l'un et l'autre inclinés par rapport à un plan vertical ; éventuellement, l'axe de rotation et l'axe longitudinal du bec de sortie formant un V inversé.

15. Appareil de broyage de grains selon l'une quelconque des revendications 1 à 14, l'appareil comprenant en outre une seconde fraise fixe en rotation et une seconde fraise entraînée en rotation, la première fraise fixe en rotation et la première fraise entraînée en rotation pouvant être remplacées par la seconde fraise fixe en rotation et la seconde fraise entraînée en rotation.
